Europäisches Patentamt

European Patent Office

Office européen des brevets

(11) Publication number: **0 269 285**
A1

(12) **EUROPEAN PATENT APPLICATION**

(21) Application number: **87309631.7**

(22) Date of filing: **30.10.87**

(51) Int. Cl.4: **B65D 25/52** , B65D 83/06 ,
G01F 11/26

(30) Priority: **30.10.86 NZ 217922**

(43) Date of publication of application:
**01.06.88 Bulletin 88/22**

(84) Designated Contracting States:
**DE FR GB IT**

(71) Applicant: **Preest, David Stanley Heath**
**74 Utuhina Road**
**Rotorua(NZ)**

(72) Inventor: **Preest, David Stanley Heath**
**74 Utuhina Road**
**Rotorua(NZ)**

(74) Representative: **Newstead, Michael John et al**
**Page & Co. Temple Gate House Temple Gate**
**Bristol BS1 6PL(GB)**

(54) **Volumetric metering apparatus.**

(57) Apparatus for metering dry flowable particulate material from a bulk supply is described. The apparatus has a metering chamber (1) of a measured volume, an inlet (2) to the chamber and an outlet (4) from the chamber being provided so oriented that in one physical orientation of the apparatus the material from the supply (3) will charge the chamber (1) by gravity flow through the inlet (2) but will not flow through the outlet (4), and when the apparatus is moved (e.g. through 90° ) to a second physical orientation the material charged in the chamber will flow out through the outlet (4) as a metered quantity but further material from the supply (3) will not recharge the chamber while the apparatus is in the second physical orientation.

FIG 1

EP 0 269 285 A1

## VOLUMETRIC METERING APPARATUS

The invention comprises an apparatus for metering quantities of dry flowable particulate material, or numbers of items, from a bulk supply of such material or items.

In many industrial, manufacturing, scientific, agricultural and forestry activities, for example, metering of quantities of particulate material such as raw, semi-finished or finished, granulated, pelleted, prilled, or dry-frozen free-flow or like fluent material or of numbers of items is required, but not always simply achieved, on a mass-production scale in an industrial or manufacturing application for example, or where a conventional weighing device is inconvenient, time-consuming or generally impractical to use such as outdoors in an agricultural or forestry application, and so forth. Most uniform, flowable, solid particulate materials may be metered by volume as there is a sufficiently close relationship between volume and weight for volumetric metering to be used, but typical known volumetric metering apparatus are relatively complex and may be expensive to produce, often comprising a number of moving parts which are subject to jambing in use from particles of material becoming caught in the metering mechanism, and to relatively rapid wear due to the often abrasive nature of the material passing through the mechanism.

The present invention provides an improved or at least alternative form of metering apparatus. Apparatus of the invention comprises no or a minimum of moving parts, and is generally more robust in construction and more reliable and of increased longevity in operation.

In broad terms the invention may be said to comprise apparatus for metering (as herein defined) quantities of dry flowable particulate material (as herein defined) from a bulk supply of said material, comprising a metering chamber of a measured volume for containing a fixed quantity of said particulate material, an inlet to said metering chamber communicating said metering chamber to said bulk supply for charging said metering chamber with material, and an outlet from said metering chamber for material contained therein, said inlet and said outlet being so oriented relative to one another and to said metering chamber that in one physical orientation of said apparatus material will gravity flow from said bulk supply to charge said metering chamber when otherwise empty but not from said metering chamber through said outlet and that in a second physical orientation of said apparatus to which said apparatus is movable material within said metering chamber will gravity flow therefrom from said outlet but material from said supply will not enter said metering chamber through said inlet.

Preferably the apparatus is movable between its 'first orientation' and 'second orientation' by rotational movement of the apparatus, such as rotational movement in substantially a single plane, through substantially ninety degrees for example.

The apparatus may include a holding chamber in addition to the metering chamber, said holding chamber communicating via an inlet to the holding chamber to the outlet from the metering chamber and being so oriented relative to the metering chamber that when the apparatus is in it's 'second physical orientation' material passing from the metering chamber outlet will gravity flow into the holding chamber and that in a further orientation of the apparatus this material will be delivered from an outlet of the holding chamber. When in its 'further physical orientation' and when in its 'first orientation' the apparatus may be similarly positioned.

Preferably all movement required to cause the apparatus to deliver a measured quantity of material and to recharge the metering chamber with a fresh quantity of material comprises rotation of the apparatus through substantially ninety degrees followed by rotation of the apparatus in an opposite direction in substantially the same plane, back to its starting orientation. The apparatus may be formed as a unit incorporating its bulk supply as a part thereof in fixed orientation relative to the metering chamber, which unit may be of a size whereby it is intended to be held and moved between its orientations by hand.

The bulk supply of the apparatus may as stated comprise a reservoir forming a fixed part of a unit which is moved or rotated as a whole, so that the apparatus is effectively portable, or may comprise a separate bulk supply which is positioned above a unit comprising the metering chamber and which is stationary relative thereto, and which is coupled by a flexible hose connection to the unit, in which case only the metering chamber unit would move in operation. The latter arrangement may be more suitable for a production-line-type application for example.

Important to the invention are three properties of most dry (unlubricated) fluent particulate materials, that they exhibit an 'angle of repose' below which material flows do not occur, that they tend not to flow upwardly around corners under the influence of a gravitational 'head' as do liquids, and the fact that for many such materials the relationship of volume to weight of the materials and/or number of items is sufficiently close to enable volumetric metering to give relatively weight-wise or number-wise accurate quantities of material.

The apparatus of the invention may be employed for the delivery of predetermined quantities or numbers of items such as pellets, tablets, capsules, confectionery products and the like, and the expressions 'particulate material' and 'metering' are to be interpreted accordingly in this specification and claims.

The invention will be further described with reference to the accompanying drawings. In the drawings;

Fig. 1 schematically represents a first configuration of apparatus of the invention,

Fig. 2 schematically represents a second configuration of apparatus of the invention,

Figs 3A to 3D schematically show the operation of the configuration of Fig. 1,

Figs 4A to 4E schematically show the operation of the configuration of Fig. 2,

Fig. 5 is a perspective view of one embodiment of apparatus of the invention employing the configuration of Fig. 2, and

Fig. 6 is a longitudinal sectional view of a part of the apparatus of Fig. 5 along line A-A of Fig. 5.

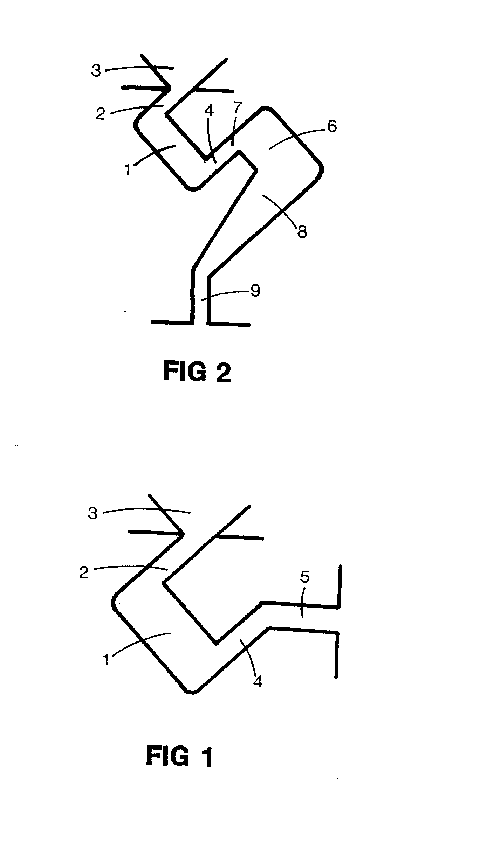

Figs 1 and 3A-D and 2 and 4A-E are intended to schematically represent and illustrate two possible configurations of bulk supply, metering chamber, and delivery chamber in Fig. 2, that may be employed in apparatus of the invention, and their operation. The figures may be viewed as showing these configurations generally in what would in use be vertical section of the apparatus.

In Figs 1 and 2 the metering chamber of each configuration is indicated by reference numeral 1. In each case the metering chamber 1 comprises a measured volume, for containing a fixed quantity of particulate material. The metering chamber 1 of each configuration comprises an inlet 2 communicating the metering chamber 1 to a bulk supply of material 3, and an outlet 4 from the metering chamber. The inlet 2 and outlet 4 are in each case oriented relative to one another and to the metering chamber 1 such that in one physical orientation of the apparatus material will gravity flow from the bulk supply 3 to charge the metering chamber 1 when otherwise empty, but material will not flow from the metering chamber 1 through the outlet 4. In each case in a second physical orientation of the apparatus material will gravity flow from the metering chamber 1 from the outlet 4, but material from the bulk supply 3 will not enter the metering chamber 1 via the inlet 2.

The configuration represented in Fig. 2 additionally includes a holding chamber 6 in addition to the metering chamber 1. The holding chamber 6 comprises an inlet 7 which communicates with the outlet 4 from the metering chamber, and an outlet 8. The holding chamber 6 is so oriented relative to the metering chamber 1 that in the second physical orientation of the apparatus referred to, material which flows from the outlet 4 of the metering chamber 1 will pass into the holding chamber 6, and that in a further orientation of the apparatus the material thus contained within the holding chamber 6 will be delivered from the outlet 8 thereof to exit the apparatus via a delivery passage 9.

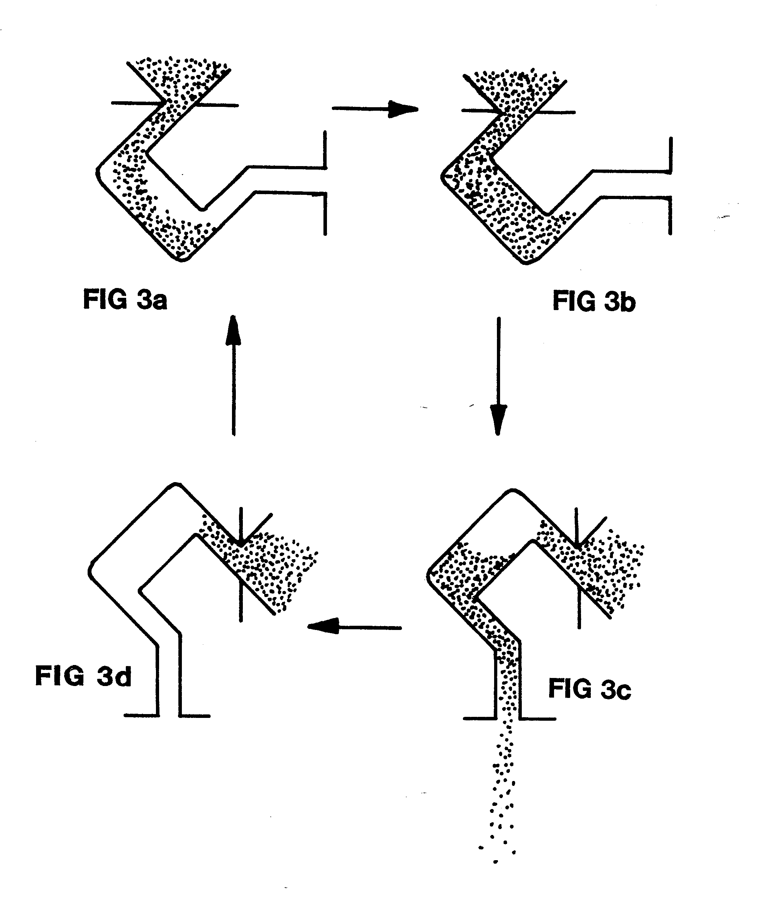

Referring specifically to Figs 3A to 3D which - schematically show the operation of the configuration of Fig. 1 and the movements required therefor, for apparatus of the invention employing this configuration the said "first physical orientation" comprises orientation of the apparatus such that the configuration is positioned generally as shown in Fig. 3A. In this orientation particulate material is free to flow under the influence of gravity from the bulk supply 3 through the inlet 2 and into the metering chamber 1, until the metering chamber 1 is completely charged with material as shown in Fig. 3B. Notwithstanding the presence of the "head" of material within the bulk supply 3, material within the metering chamber 1 does not flow from the outlet 4 of the metering chamber, due to the orientation of the outlet 4 in relation to the metering chamber 1 in this physical orientation of the apparatus and to the inherent nature of the particulate material itself as referred to. To cause the measured quantity of material to be delivered from the metering chamber 1 the apparatus is moved to its "second physical orientation" shown in Fig. 3C. In this orientation material will flow under the influence of gravity from the metering chamber 1 through the outlet 4. The apparatus includes a delivery passage 5, from which material passing from the outlet 4 exits the apparatus. The measured quantity of material within the metering chamber 1 will flow from the outlet 4 until material at the metering chamber inlet 2 attains its angle of repose and the metering chamber 1 is empty, as shown in Fig. 3D. When the apparatus is returned to its first physical orientation shown in Fig. 3A the metering chamber 1 will again be charged with material from the bulk supply 3, so that the cycle of operations may be repeated to discharge further quantities of material.

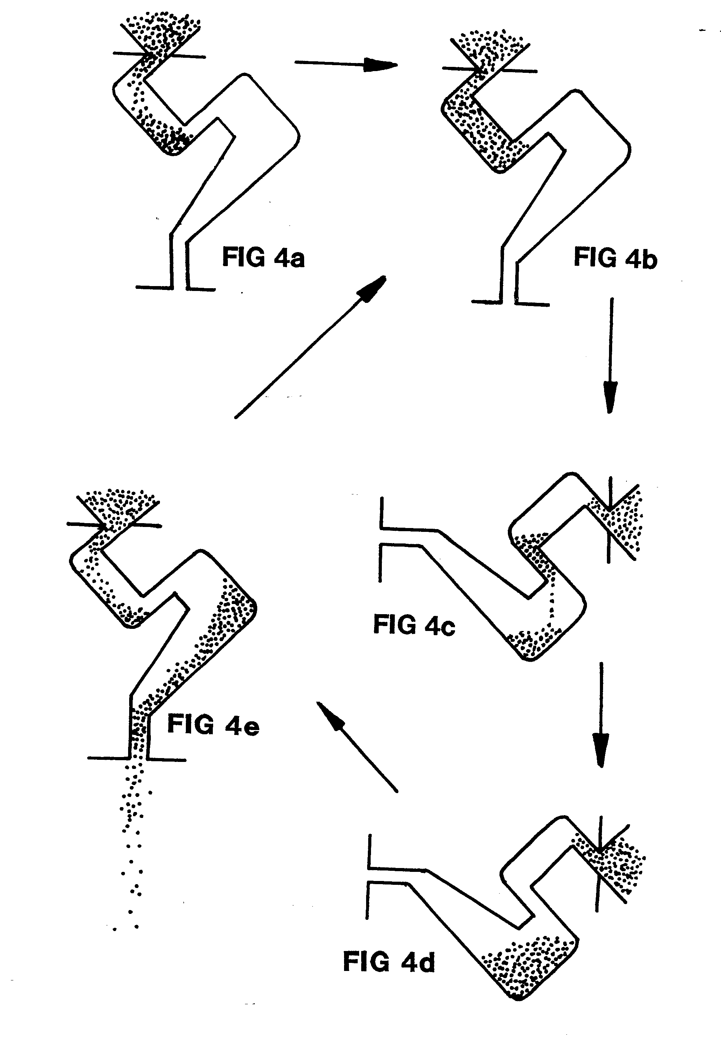

The operation of the configuration of Fig. 2 is - schematically shown in Figs 4A to 4E. When the apparatus employing this configuration is in its first physical orientation the configuration is positioned generally as shown in Fig. 4A. In this orientation material will gravity flow into the metering chamber 1 from the bulk supply 3 through the metering chamber inlet 2, until the metering chamber 1 is completely charged with material as shown in Fig. 4B. When the apparatus is moved to its second physical orientation shown in Fig. 4C, the measured quantity of material within the metering chamber 1 will flow from the outlet 4 and will in this configuration enter the holding chamber 6 through the 7 inlet thereof, until material at the metering chamber inlet 2 attains its angle of repose and all the material within the metering chamber 1 is in the holding chamber 6 as shown in Fig. 4D. To cause the measured quantity of material within the holding chamber to exit the apparatus the apparatus is moved to a further orientation shown in Fig. 4E, in which the material within in the holding chamber will gravity flow from same to exit the apparatus via the delivery passage 9. In the configuration shown, when in the 'further orientation' and 'first orientation' the apparatus is similarly positioned, so that as material exits from the delivery chamber 6 the metering chamber 1 will be recharged with material, as shown in Fig. 4E.

In apparatus of the invention comprising a configuration of metering chamber and optional holding chamber as shown in either of Figs 1 and 2, movement of the apparatus between its first orientation wherein the metering chamber is charged/recharged with material, and its second orientation wherein the material within the metering chamber is delivered from the outlet thereto, comprises rotational movement of the apparatus, through substantially 90°, about an axis extending substantially transversely to the direction of entry of the metering chamber inlet 2 and leaving of the outlet 4, in a single plane. The return movement of the apparatus from its second orientation back to its first orientation also comprises rotational movement, in an opposite direction, in the same plane, so that all movement required to cause the apparatus to deliver a measured quantity of material and to recharge the metering chamber for delivery of a further quantity of material comprises rotation of the apparatus through substantially 90° and rotation of the apparatus in an opposite direction back to its starting orientation. In other forms of apparatus of the invention comprising other configurations of metering chamber and holding or other subsidiary chambers and of inlets and outlets thereto, other movements may be required to operate the apparatus. In the two configurations represented in the drawings the metering chamber inlet 2 and outlet 4 are positioned generally in the same plane, as is the delivery chamber 6 in relation to the metering chamber 1 in the Fig. 2 configuration. In other configurations the inlets and outlets and/or metering or other chambers could be positioned so as to require other movement of the apparatus, such as rotational movement in one plane followed by rotational movement in another plane. In another configuration of apparatus of the invention the movement required to charge, empty and recharge the metering chamber could comprise 360° rotational movement in one direction in a single plane, if a circular configuration was provided for example. A variety of different configurations in accordance with the invention are possible and will be apparent to those skilled in the art.

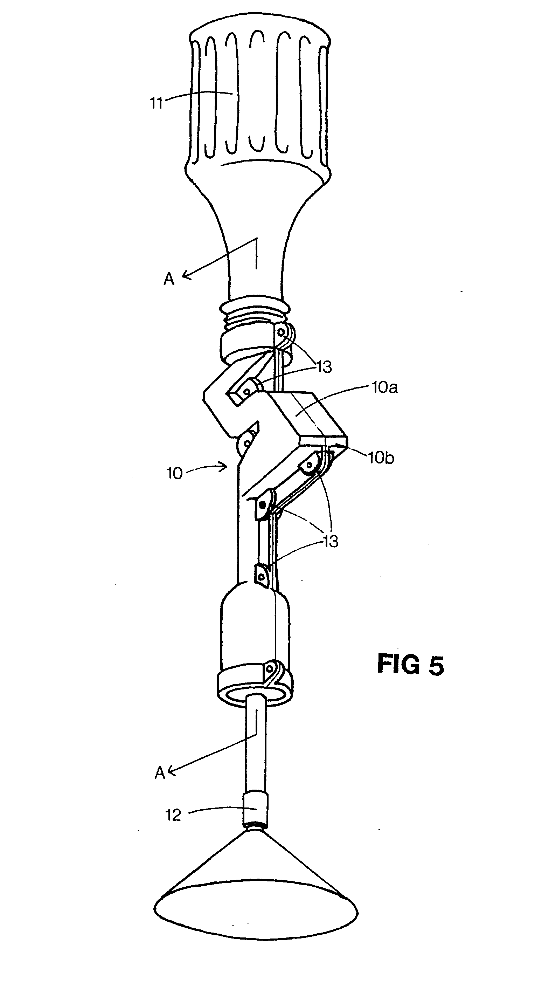

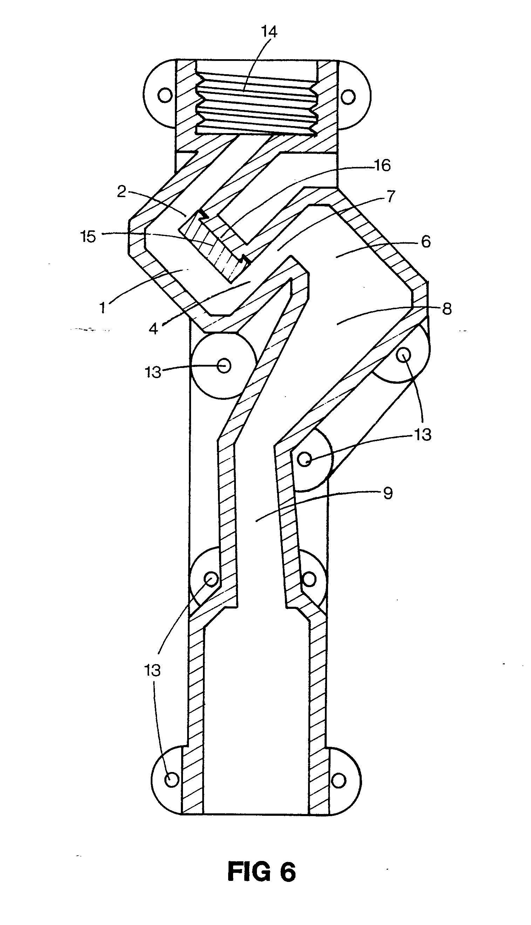

Figs 5 and 6 show one embodiment of apparatus of the invention, which comprises a configuration of metering and holding chambers generally as illustrated in Fig. 2. The device comprises an operative metering part generally indicated at 10, a bulk supply 11 and a spreading head 12. The part 10 is shown in longitudinal section in Fig. 6. The part 10 comprises two corresponding sections 10a and 10b of opposite hand which are suitably screwed or fixed together at points 13. The walls of the sections 10a and 10b define within the part 10 a metering chamber 1 comprising an inlet 2 and outlet 4, a holding chamber 6 comprising an inlet 7 and outlet 8, and a delivery passage 9. The delivery passage 9 is angled so as to evenly distribute the material onto the spreading head 12 in use. The bulk supply 11 comprises a container for material which is suitably fitted to the part 10 such that the inlet 2 to the metering chamber 1 communicates with the bulk supply 11, by screw threading of the bulk supply into a screw threaded connector part 14 of the operative part 10. The sections 10a and 10b and other components of the device may suitably be formed from a plastics material by injection moulding, for example.

In the preferred form device shown the volume of the metering chamber 1 may be varied to provide for adjustment of the quantity of material delivered by the device in each operation. A component 15 defining one wall of the metering chamber is normally retained in position by the base on the component 15 engaging a groove/keyhole-like/ dovetail arrangement 16 on a fixed wall of the device as shown. The component 15 may be replaced with larger or smaller similarly shaped components to vary the volume of the metering chamber 1, and thus the quantity of material dispensed in each operation of the device. Other arrangements providing for adjustment of the volume of the metering chamber and thus of the quantity of material delivered are possible. One or more walls of the metering chamber could be mounted by way of a screw or slide arrangement or the like whereby the wall(s) may be moved towards or away from the centre of the chamber to vary its volume, the metering chamber could be formed of a two part telescopic construction enabling movement of the two parts towards or apart from each other to vary the chamber volume, and so forth.

In the preferred form device shown the cross-sectional shape of the metering and holding chambers and the inlets and outlets thereto is generally square/rectangular, but in other forms the cross-sectional shape of the chambers/inlets/outlets may

7     0 269 285     8

be circular, oval or of any other shape suitable for a particular material to be metered, or desired.

The device shown in Figs 5 and 6 may be utilised as a dispenser for measured quantities of herbicide, fertiliser or other material to be applied to plants for example, with the complete unit being of a size whereby the unit may be hand held and moved between its orientations by hand. To deliver a measured quantity of herbicide over a plant such as a newly planted seedling, the herbicide being intended to be spread over the ground about the seedling to prevent the growth of weeds near the plant, the device is first moved to the orientation corresponding to that shown in Figs 4A/4B and is located directly above the seedling. The device is then be rotated through 90° and back again to deliver a measured quantity of herbicide. The spreading head 12 (known in the art) acts to distribute the herbicide over the area about the seedling.

Other forms of device formed similar to that of Figs 5 and 6 or other embodiments formed along similar lines comprising other configurations of metering and delivery or other chambers as referred to earlier could of course be utilised in other applications. In a manufacturing process, for example, a device could be utilised for delivering measured quantities of an ingredient to a food product during manufacture or over a food product prior to packaging. In a packaging application a device could be utilised for delivering measured quantities of material or numbers of items into containers.

As referred to previously forms of the apparatus specifically intended for metering 'particulate' items such as tablets, capsules or even metal items such as coins, washers, nails and the like are possible. In such forms of the invention it may be important to pay particular attention to the angles of the various inlets and outlets, and the internal shapes of the chambers of the apparatus, and to the rounding of internal corners and angles and the like to minimise blockages within the apparatus.

The configurations and forms of the apparatus described have been described with reference to material flows under the influence of gravity. Other forms of the apparatus are possible wherein the flows of material within the device during its operation are due to some other force or combination of forces, such as an artificial gravity, or a magnetic force produced by a suitably provided magnet, which might be employed when metering ferrous materials for example.

The foregoing describes the invention including preferred forms and configurations thereof. Alterations and modifications as will be obvious to those skilled in the art are intended to be incorporated within the scope hereof, which is defined in the following claims.

## Claims

1. Apparatus for metering (as herein defined) quantities of dry flowable particulate material (as herein defined) from a bulk supply of said material, comprising a metering chamber of a measured volume for containing a fixed quantity of said particulate material, an inlet to said metering chamber communicating said metering chamber to said bulk supply for charging said metering chamber with material, and an outlet from said metering chamber for material contained therein, said inlet and said outlet being so oriented relative to one another and to said metering chamber that in one physical orientation of said apparatus material will gravity flow from said bulk supply to charge said metering chamber when otherwise empty but not from said metering chamber through said outlet and that in a second physical orientation of said apparatus to which said apparatus is movable material within said metering chamber will gravity flow therefrom from said outlet but material from said supply will not enter said metering chamber through said inlet.

2. Apparatus as claimed in claim 1, wherein said apparatus is movable between said first orientation and said second orientation by rotational movement of said apparatus.

3. Apparatus as claimed in claim 2, wherein said rotational movement comprises rotational movement in substantially a single plane.

4. Apparatus as claimed in claim 3, wherein said rotational movement comprises rotation of said apparatus through substantially ninety degrees.

5. Apparatus as claimed in claim 4 wherein said inlet enters and said outlet leaves said measuring chamber in directions substantially parallel to one another and said rotational movement comprises movement substantially about an axis extending substantially transversely to the direction of entry of said inlet and leaving of said outlet.

6. Apparatus as claimed in claim 5, wherein said inlet to said metering chamber communicates with said bulk supply at an angle to the horizontal in excess of the angle of repose of the material being metered.

7. Apparatus as claimed in any one of the preceding claims, wherein said bulk supply is so positioned in relation to said metering chamber that in said first physical orientation said bulk supply is located above said metering chamber and in said second orientation said bulk supply is located to one side of said metering chamber.

8. Apparatus as claimed in any one of the preceding claims, including a holding chamber in addition to said metering chamber, said holding chamber communicating via an inlet to said holding chamber to said outlet from said metering chamber and said holding chamber being so oriented rela-

5

tive to said metering chamber that in said second physical orientation of said apparatus material passing from said metering chamber outlet will gravity flow into said holding chamber and that in a further orientation of said apparatus said material is delivered from an outlet of said holding chamber.

9. Apparatus as claimed in claim 8, wherein when in said further physical orientation and when in said first orientation said apparatus is similarly positioned.

10. Apparatus as claimed in any one of the preceding claims, wherein all movement from said first orientation required to cause said apparatus to deliver a measured quantity of said material and to recharge said metering chamber comprises rotation of said apparatus through substantially ninety degrees to said second orientation and rotation of said apparatus in an opposite direction in substantially the same plane back to said first orientation.

11. Apparatus as claimed in any one of claims 8 and 9 and claim 10 when dependent on either thereof, wherein said metering chamber inlet communicates said metering chamber with said bulk supply at or towards an end of said metering chamber above said metering chamber outlet (when said apparatus is in said first physical orientation) and said holding chamber inlet communicating with said metering chamber outlet is positioned above said metering chamber outlet and wherein said metering and holding chambers and said inlets/outlets thereto are positioned relative to one another such that notional lines extending between said metering chamber inlet and outlet and said holding chamber inlet and outlet are substantially parallel.

12. Apparatus as claimed in any one of the preceding claims, wherein said apparatus is formed as a unit incorporating said bulk supply as a part thereof in fixed orientation relative to said metering chamber.

13. Apparatus as claimed in claim 12, wherein said unit is of a size whereby said unit is intended to be held and moved between said orientations by hand.

14. Apparatus as claimed in claim 13, wherein said unit comprises a dispenser for measured quantities of particulate herbicide, fertiliser, or other material to be applied to or about plants.

15. Apparatus as claimed in any one of claims 1 to 13, wherein said apparatus is intended for the metering of predetermined quantities and/or numbers of discrete items.

16. Apparatus for metering quantities of dry, flowable particulate material from a bulk supply of said material, comprising a configuration of metering and holding chambers and which operates substantially as illustrated in Figs 4A - 4E of the accompanying drawings and as described herein with reference thereto.

17. Apparatus for metering quantities of dry, flowable particulate material from a bulk supply of said material, of a configuration and which operates substantially as illustrated in Figs 3A - 3D of the accompanying drawings and as described herein with reference thereto.

**FIG 2**

**FIG 1**

**FIG 3a**

**FIG 3b**

**FIG 3d**

**FIG 3c**

FIG 4a

FIG 4b

FIG 4c

FIG 4d

FIG 4e

FIG 5

FIG 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 584 771 (WAKAMATSU)<br>* column 2, lines 38-75; figures 3, 4 *<br>--- | 1-4,7,13 | B 65 D 25/52<br>B 65 D 83/06<br>G 01 F 11/26 |
| X | US-A-3 327 910 (GOULD)<br>* column 2, line 27 - column 3, line 32; figures 1-5 *<br>--- | 1-3,5-13 | |
| X | US-A-2 853 213 (BUEHLIG)<br>* column 3, line 69 - column 4, line 57; figures 4-6 *<br>--- | 1-3,5,8,9,11-13 | |
| A | US-A-4 461 400 (KEMPF et al.)<br>* column 1, line 13 - column 2, line 4; figures 1-7 *<br>----- | 1,14 | |

|  | TECHNICAL FIELDS SEARCHED (Int. Cl.4) |
|---|---|
|  | B 65 D 5/00<br>B 65 D 25/00<br>B 65 D 83/00<br>B 65 G 65/00<br>G 01 F 11/00 |

The present search report has been drawn up for all claims

| Place of search | Date of completion of the search | Examiner |
|---|---|---|
| BERLIN | 25-01-1988 | SIMON J J P |